Europäisches Patentamt

European Patent Office

Office européen des brevets

(11) Veröffentlichungsnummer: **0 307 998 B1**

(12) **EUROPÄISCHE PATENTSCHRIFT**

(45) Veröffentlichungstag der Patentschrift: **13.05.92**

(51) Int. Cl.⁵: **G01G 3/14**, G01L 1/22

(21) Anmeldenummer: **88201896.3**

(22) Anmeldetag: **05.09.88**

(54) **Kraftaufnehmer.**

(30) Priorität: **12.09.87 DE 3730703**

(43) Veröffentlichungstag der Anmeldung:
**22.03.89 Patentblatt 89/12**

(45) Bekanntmachung des Hinweises auf die
Patenterteilung:
**13.05.92 Patentblatt 92/20**

(84) Benannte Vertragsstaaten:
**DE FR GB IT**

(56) Entgegenhaltungen:
**EP-A- 0 052 257**
**EP-A- 0 105 564**
**DE-A- 2 314 181**
**DE-A- 2 930 520**

**PATENT ABSTRACTS OF JAPAN, Band 7, Nr.
78 (P-188)[1223], 31. März 1983; & JP-A-58
9033 (YAMATO SEIKOU K.K.) 19-01-1983**

(73) Patentinhaber: **Philips Patentverwaltung
GmbH
Wendenstrasse 35 Postfach 10 51 49
W-2000 Hamburg 1(DE)**

(84) Benannte Vertragsstaaten:
**DE**

(73) Patentinhaber: **N.V. Philips' Gloeilampenfabrieken
Groenewoudseweg 1
NL-5621 BA Eindhoven(NL)**

(84) Benannte Vertragsstaaten:
**FR GB IT**

(72) Erfinder: **Krause, Matthias
Hermann-Balk-Strasse 58
W-2000 Hamburg 73(DE)**

(74) Vertreter: **Kupfermann, Fritz-Joachim,
Dipl.-Ing. et al
Philips Patentverwaltung GmbH Wendenstrasse 35 Postfach 10 51 49
W-2000 Hamburg 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen Kraftaufnehmer, insbesondere für Wägezellen, mit einem Verformungskörper, der wenigstens eine quer zur Kraftrichtung liegende Öffnung aufweist, an die mindestens ein scheibenförmiger, dem Öffnungsquerschnitt entsprechender, quer zur Achse der Öffnung liegender Träger mit mindestens einem in Schichttechnik aufgebrachten Dehnungsmeßstreifen geschweißt ist.

Ein solcher Kraftaufnehmer für Wägezellen ist aus der EP-PS 0 105 564 bekannt. Der bekannte Kraftaufnehmer weist einen zylindrischen, als Stauchkörper ausgebildeten Verformungskörper auf, in dem eine durchgehende, quer zur Kraftrichtung liegende Bohrung vorhanden ist. Zentrisch in dieser Bohrung ist ein scheibenförmig ausgebildeter Träger eingeschweißt, der quer zur Achse der Bohrung liegt. Auf dem Träger sind Dehnungsmeßstreifen in Schichttechnik aufgebracht. Bei Einwirkung einer Kraft in Richtung quer zur Bohrung wird der Träger in Richtung der Kraft gestaucht und senkrecht zur Kraft gedehnt. Diese Stauchung bzw. Dehnung führt zu einer Widerstandsänderung der Dehnungsmeßstreifen. Die zentrische Anbringung des scheibenförmigen Trägers in der Bohrung ist kompliziert, da die Schweißstelle innerhalb der Bohrung schwer zugänglich ist. Da die in Schichttechnik aufgebrachten Dehnungsmeßstreifen feuchtigkeitsempfindlich sind, müssen sie durch Abdeckungen vor Korrosion geschützt werden.

Der Erfindung liegt daher die Aufgabe zugrunde, einen Kraftaufnehmer zu schaffen, der eine leichte Anbringung des Trägers an der Öffnung ermöglicht und dessen Dehnungsmeßstreifen ohne weitere Abdeckungen vor Korrosion geschützt sind.

Diese Aufgabe wird bei einem Kraftaufnehmer der eingangs genannten Art dadurch gelöst, daß wenigstens ein Träger am Außenrand der Öffnung angeschweißt ist, der die Öffnung vollständig verschließt und den Dehnungsmeßstreifen auf seiner Innenseite trägt.

Der erfindungsgemäße Kraftaufnehmer kann eine durchgehende Öffnung aufweisen, die von jeweils zwei Trägern, die an den beiden Außenrändern der Öffnung durch Schweißung angebracht sind, vollständig verschlossen werden. Am Außenrand der Öffnung ist eine leichte Anbringung möglich. Die Öffnung kann auch als Sackloch ausgebildet sein. Der Querschnitt einer solchen Öffnung kann quadratisch, rechteckig oder kreisförmig sein. Da die Dehnungsmeßstreifen auf der Innenseite des Trägers, d.h. auf der Seite des Trägers, die in Richtung der Öffnung zeigen, angebracht sind, kann ein aggressives Medium die Dehnungsmeßstreifen nicht beeinflussen. Der Verformungskörper kann als Stauchkörper oder Scherkörper (zur Aufnahme von Scherkräften) ausgebildet sein. Ein Stauchkörper kann beispielsweise aus einem quaderförmigen Körper oder aus einem zylinderförmigen Körper bestehen. Wenn der Körper zylinderförmig ist, muß an der Außenfläche des Körpers der Außenrand der Öffnung so ausgebildet sein, daß die Randkurve der Öffnung in einer Ebene verläuft.

Ein einfach herzustellender Kraftaufnehmer ergibt sich dadurch, daß die Öffnung eine kreiszylindrische Durchgangsbohrung ist, die durch zwei, jeweils am Außenrand der Bohrung verschweißte Träger verschlossen ist.

Bei Kraftaufnehmern für hohe Lasten ist es oft erforderlich, den Querschnitt der Durchgangsbohrung zu verringern. Um einen solchen Querschnitt für die Bohrung zu erhalten, ist vorgesehen, daß zwei als Sackbohrung ausgebildete, einander gegenüberliegende Öffnungen durch jeweils einen am Außenrand der Bohrung angeschweißten Träger verschlossen sind. Hierbei befindet sich ein Steg zwischen den Sackbohrungen im Verformungskörper. Dieser Steg dient zur Stärkung des Kraftaufnehmers bei der Messung hoher Lasten.

Eine vorteilhafte Ausgestaltung der Erfindung ergibt sich, wenn der Träger für die Dehnungsmeßstreifen und der Verformungskörper aus dem gleichen Material bestehen. Hiermit wird erreicht, daß bei einer Temperaturveränderung kein Meßfehler auftritt. Da Träger und Verformungskörper aus dem gleichen Material bestehen, haben sie nämlich auch den gleichen Ausdehnungskoeffizienten.

Ausführungsbeispiele der Erfindung werden nachstehend anhand der Zeichnung näher erläutert. Es zeigen:

Fig. 1 eine Seitenansicht eines Stauchkörpers mit rechteckigem Querschnitt,

Fig. 2 einen Schnitt durch einen Stauchkörper gemäß Fig. 1 mit durchgehender Bohrung längs der Ebene II-II,

Fig. 3 einen Schnitt durch einen Stauchkörper gemäß Fig. 1 mit zwei gegenüberliegenden Sackbohrungen längs der Ebene II-II,

Fig. 4 eine Seitenansicht eines Stauchkörpers mit kreisförmigem Querschnitt und

Fig. 5 einen Schnitt durch den Stauchkörper gemäß Fig. 4 längs der Ebene III-III.

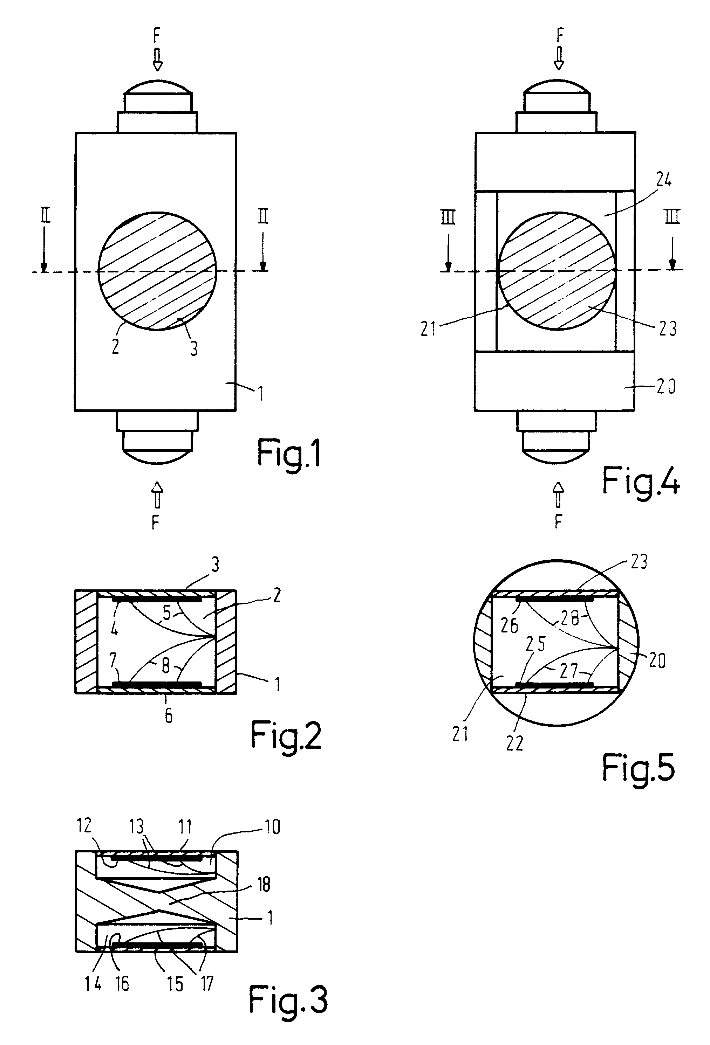

In Fig. 1 ist ein Kraftaufnehmer für eine Wägezelle dargestellt, der einen quaderförmigen Stauchkörper 1 aufweist. Im Stauchkörper 1 befindet sich quer zur Längsachse eine Öffnung 2, die als kreiszylindrische Durchgangsbohrung ausgebildet ist, wie in Fig. 2 dargestellt ist. Die Öffnung 2 ist beidseitig durch je einen scheibenförmigen, metallischen Träger 3 bzw. 6 durch Verschweißen verschlossen. Die Fläche der Träger 3 und 6 ist im wesentlichen gleich dem Querschnitt der Durchgangsbohrung 2. Die die scheibenförmigen Träger 3 und 6 und einen Rand der Durchgangsbohrung 2 verbindende Schweißnaht reicht über den gesamten Umfang der Träger 3 und 6. Unter Verschweißen ist hierbei eine unlösbare Verbindung zu verstehen, die vorzugsweise durch Verschmelzung der Materialien oder durch Legierung an den Verbindungsteilen entsteht. Die Träger 3 und 6 können mit dem Stauchkörper 1 durch Mikroplasmaschweißen, Laserschweißen, Elektronenstrahlschweißen oder durch Hartlöten verbunden sein. Auf der Innenseite der Träger 3 und 6 sind Dehnungsmeßstreifen 4 bzw. 7 in Dünnfilmtechnik aufgebracht, d.h. aufgedampft oder aufgesputtert. Sie können aber auch in Dickschichttechnik auf die Träger aufgebracht sein. Hierbei werden die Dehnungsmeßstreifen als Widerstandspaste im Siebdruckverfahren auf die Träger 3 und 6 aufgedruckt und eingebrannt. Die Dehnungsmeßstreifen 4 und 7 sind noch mit elektrischen Verbindungen 5 und 8 verbunden, die durch einen Kanal im Stauchkörper 1 nach außen geführt werden.

Wirkt eine Kraft F auf den Stauchkörper 1, wird dieser in Richtung der Kraft F gestaucht und senkrecht dazu ausgebaucht. Die Formänderung des Stauchkörpers 1 führt zu einer Stauchung der Träger 3 und 6 in Richtung der Kraft F und zu einer Dehnung der Träger 3 und 6 senkrecht zur Kraft F. Die Stauchung der Träger 3 und 6 verringert den Widerstand der Teile der Dehnungsmeßstreifen 4 bzw. 7, die senkrecht zur Kraftrichtung aufgebracht sind; die Dehnung der Träger 3 bzw. 6 vergrößert den Widerstand der Teile der Dehnungsmeßstreifen 4 bzw. 7, die senkrecht zur Kraftrichtung F aufgebracht sind. Mit Hilfe einer hier nicht näher dargestellten Auswerteschaltung wird die Widerstandsänderung der Dehnungsmeßstreifen 4 und 7 in ein der Kraft F proportionales elektrisches Meßsignal umgewandelt.

Die Öffnung der Fig. 1 kann auch als Sackbohrung ausgebildet sein. Wie in Fig. 3 dargestellt ist, wird die Sackbohrung 10 ebenfalls durch einen Träger 11, der auf seiner Innenseite Dehnungsmeßstreifen 12 aufweist, durch vollständige Verschweißung miteinander verbunden. Die Dehnungsmeßstreifen 12 sind mit elektrischen Verbindungen 13 verbunden. Der Sackbohrung 10 liegt eine weitere Sackbohrung 14 gegenüber, die durch einen Träger 15 verschlossen ist. Der Träger 15 weist ebenfalls auf seiner Innenseite Dehnungsmeßstreifen 16 auf, an die elektrische Leitungen 17 angeschlossen sind. Durch die beiden gegenüberliegenden Sackbohrungen 10 und 14 entsteht ein Steg 18 im Stauchkörper 1, wodurch die Ausführungsform gemäß der Fig. 3 in höheren Lastbereichen eingesetzt werden kann als die Ausführungsform gemäß der Fig. 2.

Eine weitere Ausführungsform eines Kraftaufnehmers, der einen zylindrischen Stauchkörper 20 aufweist, ist in den Fig. 4 und 5 dargestellt. Dieser zylindrische Stauchkörper 20 weist eine kreiszylindrische Durchgangsbohrung 21 auf, die durch zwei jeweils am Außenrand der Durchgangsbohrung verschweißte Träger 22 und 23 verschlossen ist. Am jeweiligen Ende der kreiszylindrischen Durchgangsbohrung 21 besitzt der an sich zylindrische Stauchkörper 20 Abflachungen 24, die bewirken, daß die Randkurve an jedem Ende der Durchgangsbohrung in einer Ebene verläuft. Auf der Innenseite der beiden scheibenförmigen Träger 22 und 23 sind jeweils Dehnungsmeßstreifen 25 und 26 aufgebracht, an die elektrische Verbindungen 27 und 28 angeschlossen sind.

Um gleiche Ausdehnungskoeffizienten für den Träger und den Stauchkörper eines solchen Kraftaufnehmers zu erhalten, sollten Träger und Stauchkörper aus dem gleichen Material, vorzugsweise Metall bestehen.

## Patentansprüche

1. Kraftaufnehmer, insbesondere für Wägezellen, mit einem Verformungskörper (1, 20), der wenigstens eine quer zur Kraftrichtung liegende Öffnung aufweist, an die mindestens ein scheibenförmiger, dem Öffnungsquerschnitt entsprechender, quer zur Achse der Öffnung liegender Träger mit mindestens einem in Schichttechnik aufgebrachten Dehnungsmeßstreifen geschweißt ist, dadurch gekennzeichnet, daß der Träger (3, 6; 11, 15; 22, 23) am Außenrand der Öffnung (2; 10, 14; 21) angeschweißt ist, der die Öffnung vollständig verschließt und den Dehnungsmeßstreifen (4, 7; 12, 16; 25, 26) auf seiner Innenseite trägt.

2. Kraftaufnehmer nach Anspruch 1, dadurch gekennzeichnet, daß die Öffnung eine kreiszylindrische Durchgangsbohrung (2; 21) ist, die durch zwei, jeweils am Außenrand der Bohrung verschweißte Träger (3, 6; 22, 23) verschlossen ist.

3. Kraftaufnehmer nach Anspruch 1, dadurch gekennzeichnet, daß zwei als Sackbohrung (10, 14) ausgebildete, einander gegenüberliegende Öffnungen durch jeweils einen am Außenrand der Bohrung angeschweißten Träger (11, 15) verschlossen sind.

4. Kraftaufnehmer nach einem der vorhergehenden Ansprüche, dadurch gekennzeichnet, daß der Träger für die Dehnungsmeßstreifen und der Verformungskörper aus dem gleichen Material bestehen.

## Claims

1. A force sensor, in particular for weighing cells, comprising a deformable member (1, 20) which has at least one aperture, extending transversely of the direction of the force, whereto at least one disc-shaped support which corresponds to the cross-section of the aperture and extends transversely of the axis of the aperture is welded, at least one strain gauge being deposited on said support by means of a film technique, characterized in that the support (3,6; 11,15; 22,23) is welded to the outer edge of the aperture (2; 10,14; 21), which support fully covers the aperture and supports the strain gauges (4,7; 12,16; 25,26) on its interior side.

2. A force sensor as claimed in Claim 1, characterized in that the aperture is a circular cylindrical through-bore (2; 21) which is closed by two supports (3, 6; 22,23) welded to each time the outer edge of the bore.

3. A force sensor as claimed in Claim 1, characterized in that two facing apertures in the form of blind bores (10, 14) are both closed by supports (11, 15) which are welded each lime to the outer edge of the bore.

4. A force sensor as claimed in any one of the preceding Claims, characterized in that the support for the strain gauges and the deformable member are made of the same material.

## Revendications

1. Capteur de force, notamment pour des cellules de pesage, muni d'un corps déformable (1, 20) présentant au moins une ouverture s'étendant transversalement à la direction de la force et à l'endroit de laquelle est soudé au moins un support en forme de disque copondant à la section transversale de l'ouverture et s'étendant transversalement à l'axe de l'ouverture, support qui est pourvu d'au moins une jauge de contrainte déposée par la technique de la formation de couches, caractérisé en ce que le support (3, 6; 11, 15; 22, 23) est soudé au bord extérieur de l'ouverture (2; 10, 14; 21) support qui ferme entièrement l'ouverture et qui, sur sa face intérieure, porte la jauge de contrainte (4, 7; 12, 16; 25, 26).

2. Capteur de force selon la revendication 1, caractérisé en ce que l'ouverture est un alésage traversant en forme de cylindre à base circulaire (2; 21) fermé par deux supports (3, 6; 22, 23) soudés chacun au bord extérieur de l'alésage.

3. Capteur de force selon la revendication 1, caractérisé en ce que deux ouvertures opposées, réalisées sous la forme d'alésages aveugles (10, 14), sont fermées chacune par un support (11, 15) fixé par soudage au bord extérieur de l'alésage.

4. Capteur de force selon l'une quelconque des revendications précédentes, caractérisé en ce que le support pour les jauges de contrainte et le corps déformable sont constitués par le même matériau.

Fig.1

Fig.2

Fig.3

Fig.4

Fig.5